# EUROPEAN PATENT SPECIFICATION

(11) **EP 0 459 711 B1**
(45) Date of publication and mention of the grant of the patent: **15.07.1998**
(21) Application number: 91304707.2
(22) Date of filing: 24.05.1991
(51) Int. Cl.: G06T 11/60, G09G 5/14

(54) **Method and apparatus for processing image data**
Verfahren und Gerät zur Bilddatenverarbeitung
Méthode et appareil de traitement de données d'image

(30) Priority: 31.05.1990 JP 143097/90
(43) Date of publication of application: 04.12.1991
(73) Proprietor: MATSUSHITA ELECTRIC INDUSTRIAL CO., LTD., Kadoma-shi, Osaka-fu, 571 (JP)
(72) Inventor: Fumoto, Teruo, Kawasaki (JP); Kanno, Yoshimitsu, Sagamihara-shi, Kanagawa-ken (JP); Yamada, Shin, Matsushita Giken Mukougaoka-ryo, Kawasaki (JP); Kotera, Hiroaki, Kawasaki (JP)
(74) Representative: Senior, Alan Murray

(56) References cited:
- EP-A- 0 280 582
- IBM TECHNICAL DISCLOSURE BULLETIN vol. 30, no. 11, April 1988, USA pages 268 - 270 , XP98796 'transparent window selection'

## Description

This invention relates to a method and apparatus for processing image data. For example, this invention relates to a method and an apparatus for editing two sets of image data into a composite image data set.

In the field of computer graphics, it is known to edit two sets of image data into a composite image data set. As will be explained later, a prior art method and a prior art apparatus for editing image data have some problems.

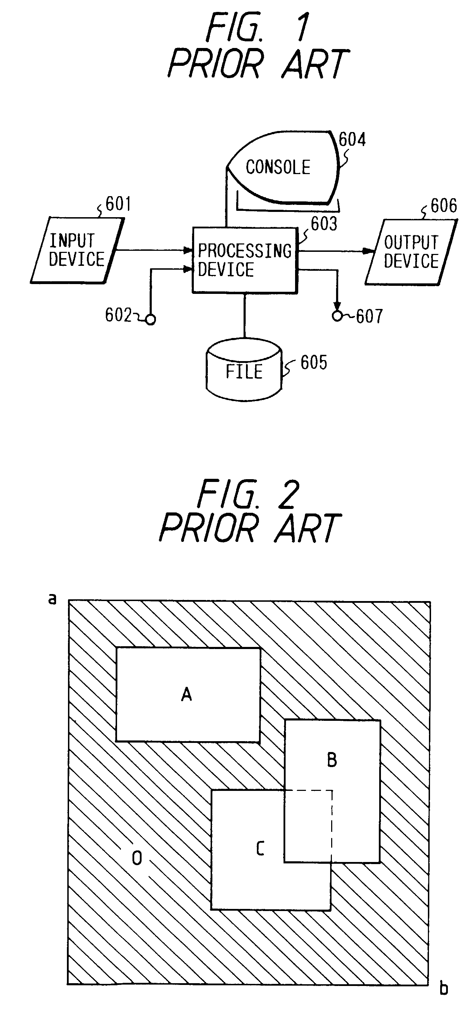

As shown in Fig. 1, a prior art apparatus for processing image data includes an image input device 601, an image data input terminal 602, and an image data processing device 603.

The image input device 601 includes, for example, a scanner. The image input device 601 outputs image data to the image data processing device 603. Image data can be fed from an external device (not shown) to the image data processing device 603 via the image data input terminal 602. The image data processing device 603 includes a computer having a CPU, a RAM, and a storage device for storing a program. The image data processing device 603 operates in accordance with this program. The image data processing device 603 stores the input image data into an image data file device 605 including, for example, a magnetic disk.

A console 604 is connected to the image data processing device 603. The console 604 includes a display or a monitor, and a manual operating device such as a keyboard and a mouse. During image data processing, the image data processing device 603 reads out image data from the image data file device 605 and then transfers the image data to the monitor in the console 604 so that the image data will be visualized on the monitor. While the operator observes the reproduced image on the monitor, the operator actuates the operating device in the console 604 to input instructions of processing the reproduced image, for example, instructions of revising, changing, and editing the reproduced image. The input instructions are transmitted from the console 604 to the image data processing device 603. The image data processing device 603 processes the image data in compliance with the input instructions by referring to an image data processing segment of the program. The resultant image data are fed from the image data processing device 603 to the monitor in the console 604 so that the resultant image data will be visualized on the monitor. The resultant image data are output from the image data processing device 603 to an image output device 606. The resultant image data can be output from the image data processing device 603 to an external device (not shown) via an image data output terminal 607.

Fig. 2 shows an example of conditions of indicated information on the monitor in the console 604. As shown in Fig. 2, this example includes different images "A", "B", and "C" which respectively occupy regions within an editing area [a, b], that is, an editing rectangular area defined by opposing vertex points "a" and "b". A description will be given of editing the images "A", "B", and "C" into a composite image which fills the editing area [a, b]. Firstly, data having values equal to "0" are generated as initial data representing an initial image filling the editing area [a, b]. Secondly, the initial image data are processed into second image data by adding data of the image "A" to the initial image data. Then, the second image data are similarly processed into third image data in response to data of the image "B". Similarly, the third image data are processed into final image data in response to data of the image "C". The final image data represent an image which occupies the editing area [a, b] and which agrees with a resultant of editing the images "A", "B", and "C".

The above-mentioned prior art method and apparatus have the following problems. In the case of editing two or more images into a composite image, it is necessary to newly prepare an edited image data file in the image data file device 605. As shown in Fig. 2, the resultant image has a hatched area which is represented by meaningless data "0". The meaningless data "0" occupies a part of an image memory within the image data processing device 603, so that the part of the image memory is wasted.

EP-A-0,280,582 discloses a windowing system which controls window size and positioning by varying the mapping of the display memory.

It is an aim of this invention to provide an improved method of processing image data.

It is another aim of this invention to provide an improved apparatus for processing image data.

A first aspect of this invention provides a method of processing image data representative of at least first and second source images having respective overlap portions which overlap each other in indicated positions, the method comprising the steps of storing input source images as digital data; editing the digital data into edited image data; and outputting the edited image data; characterised in that the step of editing the digital data comprises:
changing data in the overlap portion of said first image so as to represent both display information of the overlap portion of the first image and display information of the overlap portion of said second image and setting data of the overlap portion of said second image to a predetermined value.

A second aspect of this invention provides an apparatus for processing image data representative of first and second images having respective overlap portions which overlap each other in indicated positions, the apparatus comprising:
means for changing data of the overlap portion of the first image so as to represent both display information of the overlap portion of the first image and display information of the overlap portion of the second image, thereby to generate data representative of a third image, said third image corresponding to the first image in the non-overlapped portions and to a combination of the first and second images in the overlapped portions;
means for processing the data of the overlap portion of the second image to set that data to a predetermined value and to generate data representative of a fourth image, said fourth image corresponding to the second image in the non-overlapped portion and having a predetermined value in the overlapped portion; and
means for outputting the data of the third image and the data of the fourth image.

The present invention will be further described hereinafter with reference to the following description of an exemplary embodiment and the accompanying drawings, in which:

Fig. 1 is a block diagram of a prior art apparatus for processing image data.

Fig. 2 is a diagram showing an example of an indicated composite image in the prior art apparatus of Fig. 1.

Fig. 3 is a block diagram of an apparatus for processing image data according to an embodiment of this invention.

Fig. 4 is a diagram showing an example of an indicated composite image in the apparatus of Fig. 3.

Fig. 5 is a diagram showing source images subjected to an editing process.

Fig. 6 is a diagram showing an example of an indicated composite image which occurs after an editing process is completed in the apparatus of Fig. 3.

Fig. 7 is a diagram showing an example of an indicated composite image which occurs before an editing process is completed in the apparatus of Fig. 3.

Fig. 8 is a flowchart of a part of a program operating the image data processing device in the apparatus of Fig. 3.

Fig. 9 is a diagram showing image and conditions of data stored into the output buffer in the apparatus of Fig. 3.

Fig. 10 is a flowchart of the data outputting segment of the program controlling the image data processing device in the apparatus of Fig. 3.

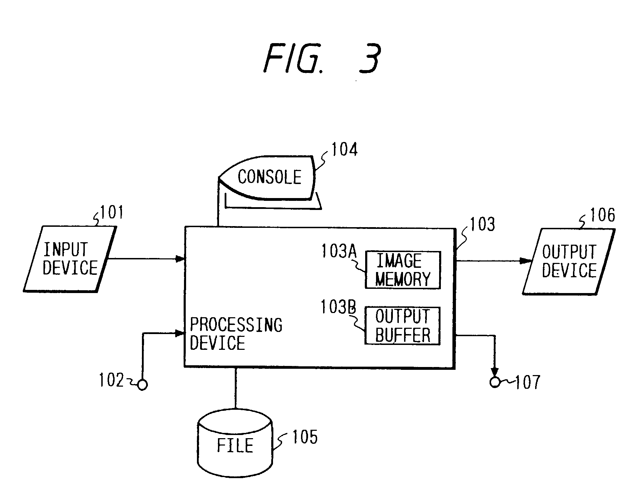

With reference to Fig. 3, an image data processing apparatus of this invention includes an image input device 101, an image data input terminal 102, and an image data processing device 103.

The image input device 101 includes, for example, a scanner. The image input device 101 outputs image data to the image data processing device 103. Image data can be fed from an external device (not shown) to the image data processing device 103 via the image data input terminal 102. The image data processing device 103 includes a computer having a CPU, a RAM, and a storage device for storing a program. The image data processing device 103 operates in accordance with this program. The image data processing device 103 stores the input image data into an image data file device 105 including, for example, a magnetic disk.

A console 104 is connected to the image data processing device 103. The console 104 includes a display or a monitor, and a manually operating device such as a keyboard and a mouse. During image data processing, the image data processing device 103 reads out image data from the image data file device 105 and then transfers the image data to the monitor in the console 104 so that the image data will be visualized on the monitor. While the operator observes the reproduced image on the monitor, the operator actuates the operating device in the console 104 to input instructions of processing the reproduced image, for example, instructions of revising, changing, and editing the reproduced image. The input instructions are transmitted from the console 104 to the image data processing device 103. The image data processing device 103 processes the image data in compliance with the input instructions by referring to an image data processing segment of the program. The resultant image data are fed from the image data processing device 103 to the monitor in the console 104 so that the resultant image data will be visualized on the monitor. The resultant image data are output from the image data processing device 103 to an image output device 106. The resultant image data can be output from the image data processing device 103 to an external device (not shown) via an image data output terminal 107.

The image data processing device 103 includes an image data memory 103A and an image data output buffer (an image data output buffer memory) 103B. In general, the image data memory 103A is used to store data subjected to processing and visualized on the monitor in the console 104. In addition, the output buffer 103B is used to store data to be outputted. The image memory 103A and the output buffer 103B will be explained in detail later.

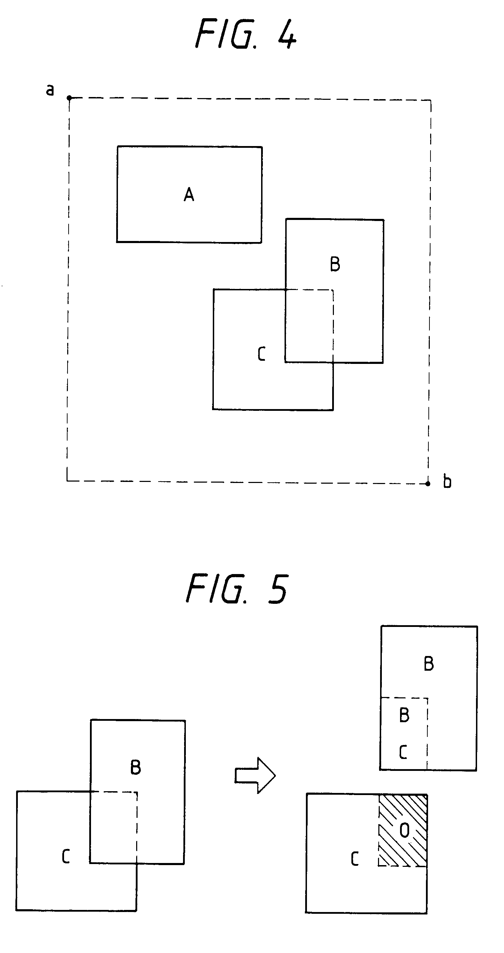

Fig. 4 shows an example of conditions of a composite image which is represented by data output from the image data processing device 103 and obtained by an editing process. In Fig. 4, an area [a, b] defined by the broken lines, that is, a rectangular area defined by opposing vertex points "a" and "b", agrees with an area of the composite image which results from the editing process. As shown in Fig. 4, the composite image has sub images "A", "B", and "C" which are generated from original images (source images) through processing, layout, or synthesis. Portions of the composite image which extend outside the sub images "A", "B", and "C" are represented by data which are not stored in the image memory 103A and which are generated in the image data buffer 103B. For example, the data of the portions of the composite image outside the sub images "A", "B", and "C" are generated by clearing the output buffer 103B.

As shown in Fig. 4, the images "B" and "C" partially overlap each other, and the images "B" and "C" occupy a higher place and a lower place respectively. As shown in Fig. 5, the overlap portion of the higher-place image "B" is represented by data which result from the editing process, while the overlap portion of the lower-place image "C" is represented by data of "0". In the image data file device 105, the data representing the image "B" and the data representing the image "C" are managed independently of and separately from each other.

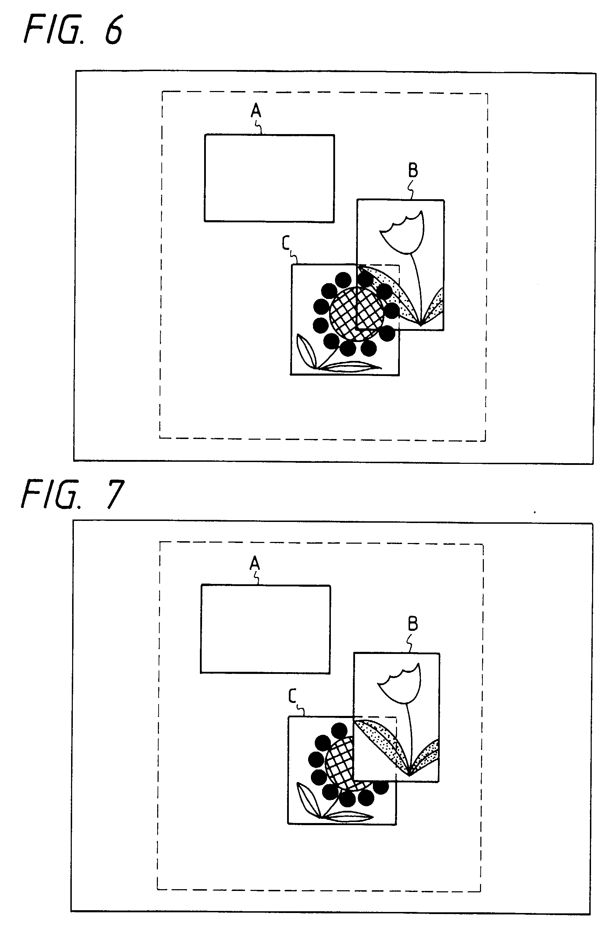

Fig. 6 shows an example of the finally-obtained composite image which is indicated on the monitor in the console 104 or an external monitor under conditions where the data of the composite image are transferred in a sequence corresponding to a direction from the lowest image place to the highest image place. In this case, since the overlap portion of the image "B" is represented by the data which result from the editing process, both the original information in the overlap portion of the image "B" and the original information in the overlap portion of the image "C" are accurately indicated.

Fig. 7 shows an example of an intermediately-obtained image which is indicated on the monitor in the console 104 or an external monitor under conditions where the editing process has not yet been completed and where the data of the image are transferred in a sequence corresponding to a direction from the lowest image place to the highest image place. In this case, the original information in the overlap portion of the image "B" is indicated, but the original information in the overlap portion of the image "C" is not indicated. The non-indication of one of the original information represents that the editing process has not yet been completed. Thus, a decision as to whether or not the editing process has been completed can be performed by referring to the conditions of the indication of the overlap portions of the images.

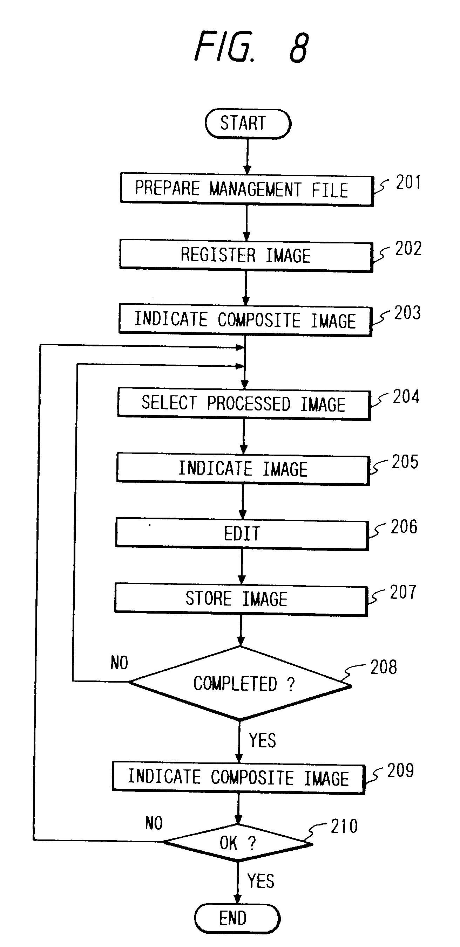

Fig. 8 is a flowchart of the editing segment of the program controlling the image data processing device 103. As shown in Fig. 8, a first step 201 of the editing segment of the program prepares a management file in accordance with operator's instruction. The management file is designed so as to manage a plurality of sub images (source images or original images) to be edited. The management file is provided in the image data file device 105. A step 202 following the step 201 registers the names of the sub images and the indicated positions of the sub images in an output composite image with the management file. A step 203 following the step 202 controls the monitor in the console 104 so that a composite image will be generated on the monitor in response to the registered information of the sub images and the data of the sub images. In the generation of the composite image, the sub images are indicated on the monitor in a sequence according to an order of the indicated positions of the sub images in an overwriting manner. When the composite image extends beyond the edges of the screen of the monitor, the composite image is contracted so that the whole of the composite image can be indicated on the monitor. At this stage, when two sub images overlap each other in the composite image, the overlap portion of one of the sub images is masked by the overlap portion of the other sub image as shown in Fig. 7. After the step 203, the program advances to a step 204.

The step 204 selects one or more of the sub images in accordance with operator's instruction. For example, the selected sub images agree with sub images overlapping each other, and the selected sub image agrees with a sub image to be edited. The step 204 transfers the information and data of the selected sub images to the image memory 103A. A step 205 following the step 204 controls the monitor in the console 104 so that the selected sub images will be indicated on the monitor.

A step 206 following the step 205 edits the overlap portions of the selected sub images in compliance with operator's instruction. Specifically, as shown in Fig. 5, the data of the overlap portion of the higher-place image are changed so as to represent both the display information of the overlap portion of the higher-place image and the display information of the overlap portion of the lower-place image, while the data of the overlap portion of the lower-place image are cleared to "0". A step 207 following the step 206 transfers the information and data of the resultant edited sub images from the image memory 103A to the image file in the image data file device 105 so that the information and data of the resultant edited sub images will replace the information and data of the corresponding previous sub images in the image file.

A step 208 following the step 207 decides whether or not the editing process is completed, that is, whether or not an image to be edited remains. When the editing process is completed, the program advances from the step 208 to a step 209. When the editing process is not completed, the program returns from the step 208 to the step 204. As a result, the steps 204-208 are reiterated until the editing process is completed.

The step 209 controls the monitor in the console 104 so that the resultant composite image will be reproduced on the monitor in response to the information and data of the edited sub images. In the reproduction of the composite image, the sub images are indicated on the monitor in a sequence according to indicated position. A step 210 following the step 209 decides whether operator's instruction represents acceptance or rejection of the indicated composite image. When the composite image is rejected, the program returns from the step 210 to the step 204. When the composite image is accepted, the editing segment of the program ends.

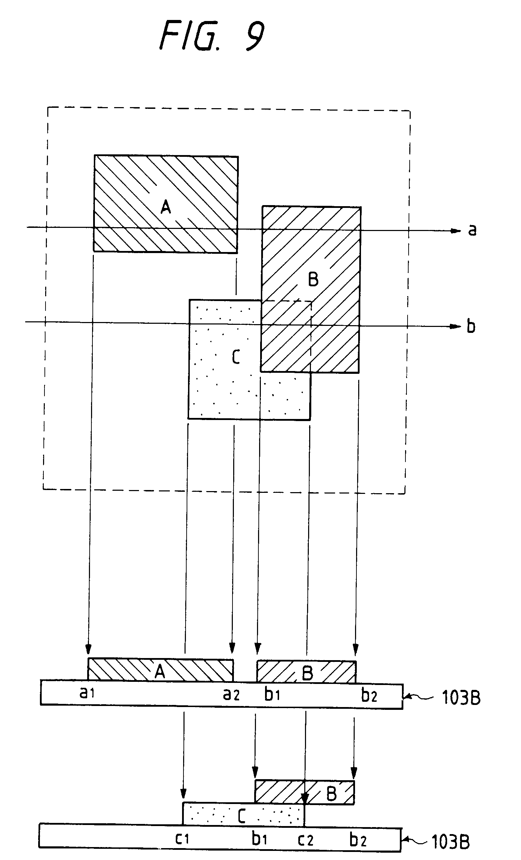

The data of the finally-obtained composite image are outputted as follows. In the case where the data of the composite image which correspond to a scanning line "a" of Fig. 9 are outputted from the image data processing device 103, it is necessary to output both the data of the sub image "A" and the data of the sub image "B". In this case, the data of the lower-place image "B" are transferred to the portion of the output buffer 103B which extends between positions b1 and b2, and then the data of the higher-place image "A" are transferred to the portion of the output buffer 103B which extends between positions a1 and a2 as shown in Fig. 9. Thereafter, the image data are transferred from the output buffer 103B to the image output device 106.

In the case where the data of the composite image which correspond to a scanning line "b" of Fig. 9 are outputted from the image data processing device 103, it is necessary to output both the data of the image "B" and the data of the image "C". In this case, the data of the lower-place image "C" are transferred to the portion of the output buffer 103B which extends between positions c1 and c2, and then the data of the higher-place image "B" are transferred to the portion of the output buffer 103B which extends between positions b1 and b2 as shown in Fig. 9. Although the data of the overlap portion of the image "B" are written over the data of the overlap portion of the image "C" in the output buffer 103B, the data in the output buffer 103B represent a correct composite image since the data of the overlap portion of the image "B" are previously changed so as to represent both the display information of the overlap portion of the image "B" and the display information of the overlap portion of the image "C".

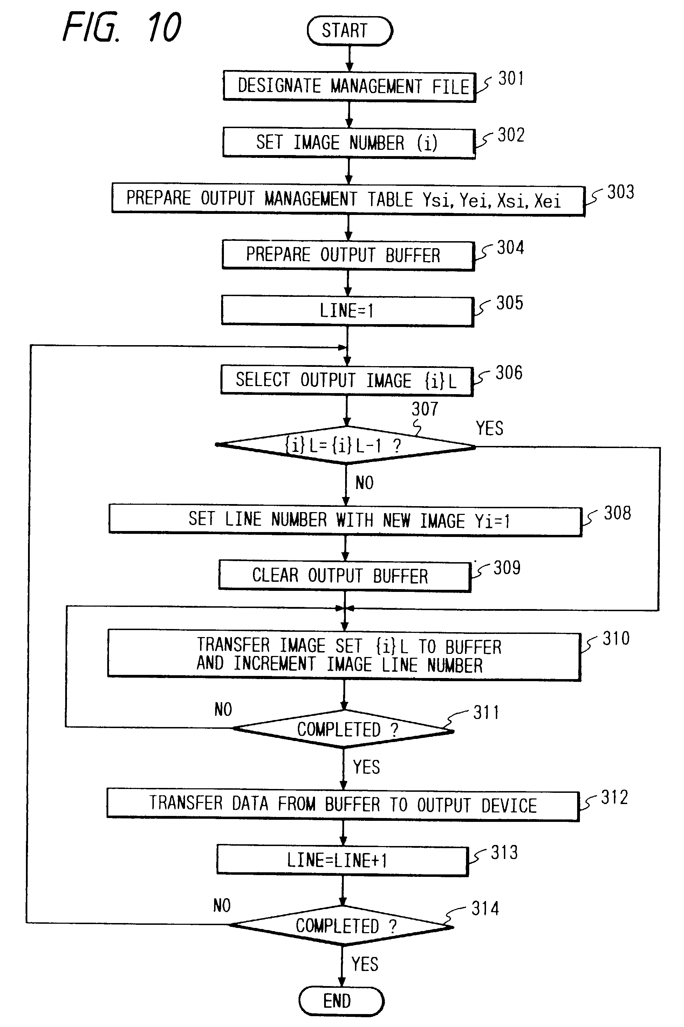

Fig. 10 is a flowchart of the data outputting segment of the program controlling the image data processing device 103. As shown in Fig. 10, a first step 301 of the data outputting segment of the program designates a management file, which is prepared in the editing process of Fig. 8, in response to operator's instruction. A step 302 following the step 301 numbers respective sub images in the management file by "i" in an order according to indicated position.

A step 303 following the step 302 prepares an output line management table in response to the information of the indicated positions of the sub images. The output line management table contains an output starting line number Ysi, an output ending line number Yei, an output starting horizontal (X) position Xsi, and an output ending horizontal (X) position Xei for each sub image denoted by a number "i". As will be explained later, an image to be output and its data are determined by referring to the output line management table. A step 304 following the step 303 prepares the image data output buffer 103B by, for example, using a portion of the RAM within the image data processing device 103. A step 305 following the step 304 initializes an output image line number "L". After the step 305, the program advances to a step 306.

The step 306 refers to the output line management table, and thereby selects a number or numbers "i" denoting a sub image or sub images to be output at the current output line "L". The step 306 generates a set {i}L of the selected number or numbers "i". A step 307 following the step 306 compares the set {i}L with the set {i}L-1 which was generated with respect to the preceding output line "L-1". This comparison is to detect whether the set {i}L has changed from the preceding set {i}L-1 or remains unchanged, that is, whether or not there occur a new sub image to be outputted at the current line "L" and the sub image which should cease from being output at the current output line "L". When the set {i}L has changed from the set {i}L-1, the program advances from the step 307 to a step 308. When the set {i}L is equal to the set {i}L-1, the program advances from the step 307 to a step 310. The step 308 sets an image line number Yi for the new sub image detected by the preceding step 307. The step 308 initializes the image line number Yi to 1. The image line number Yi is independently set for each of the respective sub images. A step 309 following the step 308 clears the output buffer 103B. After the step 309, the program advances to the step 310.

The step 310 transfers the line data of the image line number Yi of each sub image to the area of the output buffer 103B which extends between positions corresponding to the output starting horizontal position Xsi and the output ending horizontal position Xei. The line data of the sub images are transferred in a sequence according to vertical indicated position. The step 310 increments the image line number Yi which corresponds to the image number "i", the transfer of which is completed. A step 311 following the step 310 decides whether or not the transfer of the data of all the sub images is completed. When the transfer of the data of all the sub images is not completed, the program returns from the step 311 to the step 310 so that the step 310 will be reiterated. When the transfer of the data of all the sub images is completed, the program advances from the step 311 to a step 312.

The step 312 transfers the data from the output buffer 103B to the image output device 106. A step 313 following the step 312 increments the output line "L" by executing the statement "L=L+1". A step 314 following the step 313 decides whether or not the output line "L" agrees with a predetermined final line. When the output line "L" disagrees with the final line, the program returns from the step 314 to the step 306. When the output line "L" agrees with the final line, the data outputting segment of the program ends.

## Claims

1. A method of processing image data representative of at least first and second source images having respective overlap portions which overlap each other in indicated positions, the method comprising the steps of storing input source images as digital data; editing the digital data into edited image data; and outputting the edited image data;
characterised in that the step of editing the digital data comprises:
changing data in the overlap portion of said first image so as to represent both display information of the overlap portion of the first image and display information of the overlap portion of said second image and setting data of the overlap portion of said second image to a predetermined value.

2. A method according to claim 1, wherein said predetermined value is a null value.

3. A method according to claim 2 or 3, further comprising the step of selecting two of a plurality of source images as the first image and the second image in response to the indicated positions thereof.

4. An apparatus for processing image data representative of first and second images having respective overlap portions which overlap each other in indicated positions, the apparatus comprising:
means (103) for changing data of the overlap portion of the first image so as to represent both display information of the overlap portion of the first image and display information of the overlap portion of the second image, thereby to generate data representative of a third image, said third image corresponding to the first image in the non-overlapped portions and to a combination of the first and second images in the overlapped portions;
means for processing the data of the overlap portion of the second image to set that data to a predetermined value and to generate data representative of a fourth image, said fourth image corresponding to the second image in the non-overlapped portion and having a predetermined value in the overlapped portion; and
means (103B) for outputting the data of the third image and the data of the fourth image.

5. An apparatus according to claim 4, wherein the means for processing comprises means for setting the data of the overlap portion of the second image to a null value.

6. An apparatus according to claim 4 or 5, wherein the outputting means comprises an output buffer (103B), first writing means for writing the data of the fourth image into the output buffer, second writing means for, after the first writing means writes the data of the fourth image into the output buffer, writing the data of the third image into the output buffer and writing data of an overlap portion of the third image over data of an overlap portion of the fourth image, and means for outputting the data of the fourth image and the data of the third image from the output buffer (103B).

## Patentansprüche

1. Verfahren zur Verarbeitung von Bilddaten, die zumindest ein erstes und ein zweites Quellenbild mit jeweiligen Überlappungsabschnitten darstellen, die einander an angezeigten Positionen überlappen, mit den Schritten
Speichern von Eingangsquellenbildern als digitale Daten,
Aufbereiten der digitalen Daten in aufbereitete Bilddaten und
Ausgeben der aufbereiteten Bilddaten,
**dadurch gekennzeichnet, daß** der Schritt zur Aufbereitung der digitalen Daten den Schritt
Verändern von Daten in dem Überlappungsabschnitt des ersten Bildes, um sowohl Anzeigeinformationen des Überlappungsabschnitts des ersten Bildes als auch Anzeigeinformationen des Überlappungsabschnitts des zweiten Bildes darzustellen, und Setzen von Daten des Überlappungsabschnitts des zweiten Bildes auf einen vorbestimmten Wert aufweist.

2. Verfahren nach Anspruch 1, **dadurch gekennzeichnet, daß** der vorbestimmte Wert ein Null-wert ist.

3. Verfahren nach Anspruch 2 oder 3, **gekennzeichnet durch** den Schritt
Auswähzen von zwei Quellenbildern einer Vielzahl von Quellenbildern als erstes Bild und zweites Bild auf ihre angezeigten Positionen hin.

4. Gerät zur Verarbeitung von Bilddaten, die ein erstes und ein zweites Bild mit jeweiligen Überlappungsabschnitten dar-stellen, die einander an angezeigten Positionen überlappen, mit
einer Einrichtung (103) zur Veränderung von Daten des Überlappungsabschnitts des ersten Bildes, um sowohl Anzeigeinformationen des Überlappungsabschnitts des ersten Bildes als auch Anzeigeinformationen des Überlappungsabschnitts des zweiten Bildes darzustellen, um dadurch ein drittes Bild darstellende Daten zu erzeugen, wobei das dritte Bild dem ersten Bild in den nicht überlappenden Abschnitten und einer Kombination des ersten und zweiten Bildes in den überlappenden Abschnitten entspricht,
einer Einrichtung zur Verarbeitung der Daten des Überlappungsabschnitts des zweiten Bildes zum Setzen dieser Daten auf einen vorbestimmten Wert und zur Erzeugung von ein viertes Bild darstellenden Daten, wobei das vierte Bild dem zweiten Bild in dem nicht überlappenden Abschnitt entspricht und einen vorbestimmten Wert in dem überlappenden Abschnitt aufweist, und
einer Einrichtung (103B) zur Ausgabe der Daten des dritten Bildes und der Daten des vierten Bildes.

5. Gerät nach Anspruch 4, wobei die Einrichtung zur Verarbeitung eine Einrichtung zum Setzen der Daten des Überlappungsabschnitts des zweiten Bildes auf einen Null-Wert aufweist.

6. Gerät nach Anspruch 4 oder 5, wobei die Ausgabeeinrichtung einen Ausgabepuffer (103B), eine erste Schreibeinrichtung zum Schreiben der Daten des vierten Bildes in den Ausgabepuffer, eine zweite Schreibeinrichtung zum Schreiben der Daten des dritten Bildes in den Ausgabepuffer, nachdem die erste Schreibeinrichtung die Daten des vierten Bildes in den Ausgabepuffer geschrieben hat, und zum Schreiben von Daten eines Überlappungsabschnitts des dritten Bildes über Daten eines Überlappungsabschnitts des vierten Bildes und eine Einrichtung zur Ausgabe der Daten des vierten Bildes und der Daten des dritten Bildes aus dem Ausgabepuffer (103B) aufweist.

## Revendications

1. Procédé de traitement de données d'image représentatives d'au moins des première et deuxième images-sources comportant des parties de recouvrement respectives qui se recouvrent mutuellement dans des positions indiquées, le procédé comprenant les étapes consistant à stocker des images-sources d'entrée en tant que données numériques; modifier les données numériques en les transformant en données d'image modifiées; et à émettre les données d'image modifiées; caractérisé en ce que l'étape de modification des données numériques consiste:
à changer les données dans la partie de recouvrement de ladite première image de manière qu'elle représentent à la fois des informations de la partie de recouvrement de la première image et des informations d'affichage de la partie de recouvrement de ladite deuxième image et à établir les données de la partie de recouvrement de ladite deuxième image à une valeur prédéterminée.

2. Procédé selon la revendication 1, dans lequel ladite valeur prédéterminée est une valeur nulle.

3. Procédé selon la revendication 2 ou 3, comprenant en outre l'étape consistant à sélectionner deux images-sources parmi une pluralité d'images-sources en tant que la première image et la deuxième image en réponse aux positions indiquées de ces dernières.

4. Appareil pour traiter des données d'image représentatives des première et deuxième images comportant des parties de recouvrement respectives qui se recouvrent mutuellement dans des positions indiquées, l'appareil comprenant:
un moyen (103) destiné à changer des données de la partie de recouvrement de la première image de manière qu'elles représentent à la fois des informations d'affichage de la partie de recouvrement de la première image et des informations d'affichage de la partie de recouvrement de la deuxième image pour générer ainsi des données représentatives d'une troisième image, ladite troisième image correspondant à la première image dans les parties qui ne se recouvrent pas et une combinaison des première et deuxième images dans les parties qui se recouvrent; et
un moyen (103B) pour émettre les données de la troisième image et les données de la quatrième image.

5. Appareil selon la revendication 4, dans lequel le moyen de traitement comprend un moyen pour établir les données de la partie de recouvrement de la deuxième image à une valeur nulle.

6. Appareil selon la revendication 4 ou 5, dans lequel le moyen d'émission comprend une mémoire tampon de sortie (103B), un premier moyen d'écriture pour inscrire les données de la quatrième image dans la mémoire tampon de sortie, un deuxième moyen d'écriture pour, après que le premier moyen d'écriture à inscrit les données de la quatrième image dans la mémoire tampon de sortie, inscrire les données de la troisième image dans la mémoire tampon de sortie et inscrire des données d'une partie de recouvrement de la troisième image sur des données d'une partie de recouvrement de la quatrième image, et un moyen pour émettre les données de la quatrième image et les données de la troisième image provenant de la mémoire tampon de sortie (103B).
